# EUROPEAN PATENT SPECIFICATION

(11) **EP 2 716 274 B1**
(45) Date of publication and mention of the grant of the patent: **16.03.2016**
(21) Application number: 12792837.2
(22) Date of filing: 30.05.2012
(51) Int. Cl.: A61G 17/007, A61G 17/06, A61G 17/02, B65D 33/25, A61G 17/04

(54) **Biodegradable coffin**
Biologisch abbaubarer Sarg
Cercueil biodégradable

(30) Priority: 01.06.2011 ES 201130596
(43) Date of publication of application: 09.04.2014
(73) Proprietor: Limbo Disseny, S.L., 03008 Alicante (ES)
(72) Inventor: REQUENA OLCINA, Jorge, 03008 Alicante (ES); DIAZ FERRANDO, Moisés, 03008 Alicante (ES); BERTOMEU PERELLO, David, 03008 Alicante (ES); LÓPEZ MARTÍNEZ, Juan, 03008 Alicante (ES)
(74) Representative: Ungria López, Javier
(86) International application number: PCT/ES2012/070399
(87) International publication number: WO 2012/164134

(56) References cited:
- WO-A1-2009/044204
- WO-A1-2010/015853
- BE-A6- 1 012 677
- CN-U- 201 453 570
- DE-A1- 3 014 616
- ES-U- 1 070 798
- GB-A- 531 708
- GB-A- 2 115 690
- JP-A- 2010 110 400
- US-A- 4 780 940
- US-A1- 2008 040 837

## Description

### OBJECT OF THE INVENTION

The present invention, as expressed in the wording of this specification, relates to an environmentally friendly biodegradable coffin, in line with the philosophy based on a design with the utmost respect for the environment. It basically comprises a box and a characteristic flexible bag.

Given that biodegradable materials are currently the subject of study and that the variety in terms of technical properties and versatility are their potential, the invention bets on said biodegradable materials, such as natural and synthetic polymers, that adjust to an important extent to the needs of the product, which are resistance, lightness, impermeability in terms of airtightness and, as subjective properties, appropriate aesthetics in terms of their end use and ease of handling and folding.

This is why we are presenting a project where the study of the technical variables in term of the selection of materials and their properties, taking the biodegradability and eco-friendliness of the product as basis, would be the reference within the death care sector and the starting point of a race where environmental sustainability and human sensibility create an inflection point in this manner.

The invention proposes two essential objectives aimed at the development of a new product due to the environmental issues generated by the use of zinc boxes, that is to say, taking the deceased out of the zinc coffin for its cremation and manage the zinc coffin as waste to be treated as provided by current legislation.

During burials, the zinc material keeps the corpse undecomposed for a longer period of time, effecting extractions.

Therefore, a first objective is the incorporation of biodegradable materials allowing the design of the flexible bag with a size, shape and aesthetics that optimize simple lines and facilitate an easy folding during its application. Materials presenting airtightness, resistance and lightness will be prioritized, and the mechanical properties will be controlled by means of the pertinent tests. The materials used must be framed within current regulations on biodegradability with the purpose of reducing the environmental impact to the extent possible.

A second objective of the invention is the search and supply of raw materials and the pattern design and manufacturing of the surface of use.

### BACKGROUND OF THE INVENTION

The use of the zinc box currently presents issues because its manipulation is dangerous due to the risk of the possibility of causing potential cuts in the hands or other parts of the body, such that we cannot forget that it is an extremely thin sheet, which needs a very careful manipulation. It should also be noted that a large amount of zinc constitutes a problem in itself because of its disposal, given that it is an element that is not perishable by itself.

On the other hand, according to the use provided to the same, there are basically three types of coffins.

In the first place, ordinary coffins intended for controlled ordinary burials are made of fine woods; in the second place, we have specific coffins for extraordinary transfers, made of materials that are better preserved, such as zinc, which in this case require a health authorization for their transfer. Thirdly, we have remain boxes.

Eco-friendly coffins are also known, which are made of natural materials that decompose without leaving polluting elements. In addition to preserving the environment, they represent considerable monetary savings.

A biodegradable coffin is disclosed in WO 2010 / 015 853. It comprises box and multilayer flexible bag inside, but no impermeable zip is applied in it.

### DESCRIPTION OF THE INVENTION

With the purpose of achieving the objectives and avoiding the inconveniences mentioned in the previous sections, the invention proposes a biodegradable coffin comprising, in principle, a box with a lid and a flexible bag made of biodegradable materials, the flexible bag being located inside the box, the invention focusing on the aforementioned flexible bag.

This flexible bag comprises a first main body with a recess-form structure and a second body in the manner of an upper lid, both bodies comprising a structure formed by at least an outer layer of reinforcement material and at least an impermeable layer arranged next to the outer layer.

The box is made of a biodegradable material, such as wood or fiberboard, for example.

In a particular embodiment, each one of the bodies of the flexible bag comprises at least one impermeable layer and two outer layers, thus forming a sandwich-shaped structure. Another possibility is the inclusion of two inner layers.

The flexible bag is supplemented, furthermore, with an impermeable zip and anchoring means for securely fastening the set of the flexible bag by its main body to the internal surface of the box determined by the coffin.

The outer layers of reinforcement material comprise a biodegradable material with a good aesthetic finish with high mechanical resistance features that is one hundred percent natural and free of additives.

It will be shown in the outer part of the coffin, due to which it must be a material that is pleasant to the touch and visually appropriate for this application, in addition to being flexible and light. The material selected is cotton in the form of fabric, because it complies with all of the aforementioned requirements.

We have obtained a cotton fabric and the characterization thereof is the following:
- the state of the fabric is raw, without dressing and finishes;
- the composition is one hundred percent cotton;
- the threads per unit of length correspond to a warp of 25 threads per centimeter and a weave of 25 picks per centimeter;
- the ligament or texture is determined by a 1 to 1 taffeta material;
- mass per unit of surface (weight) between 155 and 165 g/cm², a preferred weight being 160 ± 5 g/cm².

The inner layer or layers of impermeable material comprise a material to prevent the potential emission of gases and liquids due to the decomposition of the corpse, said impermeable material therefore comprising a bioplastic, given that it is a biodegradable plastic.

The anchoring means to fasten the set of the flexible bag to the inner surface of the box comprise the use of biodegradable adhesives, such as high resistance double-sided tape within the range of eco-friendly products. These tapes are so resistant that they prevent the subsequent separation of the flexible bag with respect to the box.

The impermeable zip, which connects the upper lid with the opening of the main body, in one embodiment, provides the impermeable and airtight closing of the flexible bag.

In another embodiment, the upper lid of the flexible bag integrates an impermeable zip centrally arranged in a longitudinal direction.

On the other hand, the upper lid of the flexible bag integrates a first through-hole in correspondence with which a transparent laminar body made of plastic biodegradable material is mounted, facing the face of the deceased. A perimeter portion of the aforementioned laminar body is joined by sealing to achieve the impermeable and airtight closing with the same system used in the impermeable zip.

The upper lid of the flexible bag integrates a housingthrough-hole in correspondence with which a gas cleaning device with an impermeable and airtight closing as well is mounted, said gas cleaning device comprising a filter material supported by a framed joined in an airtight manner to the upper lid in correspondence with the perimeter edge of the housing-through hole.

Two types of different materials intervene in the composition of the flexible bag: in the first place, the cotton in the form of fabric as referred to above, and the bioplastic material in the form of flexible film applied to the inner impermeable layers.

The flexible bag is a multilayer product; that is to say, it is composed, in a particular embodiment, by four layers: two outer cotton layers and two bioplastic central layers, forming what is commonly referred to as a "sandwich" fabric, as has also been explained above.

The process is not vertical; there are tasks that are carried out in a parallel manner during the manufacturing process of the flexible bag.

There are two types of attachments; by sewing and by sealing with zip. The cotton fabric is joined by sewing. On the other hand, the material of the inner layers cannot be sewed due to airtightness reasons, due to which it is sealed using a zip together with the cotton fabric in the final attachment.

There are two types of patterns: a first pattern giving shape to the lower base and the upper lid, and a second pattern making up the lateral wall of the flexible bag.

The patterns must be made to cut the cotton fabric. Therefore, four pieces of the cotton fabric are cut of the first pattern, and two pieces are cut of the second pattern.

Then, two pieces of cotton are joined together by sewing the first pattern and the second pattern, repeating this procedure twice. This way, a lower base and the lateral wall are produced. Next, the two inner layers of bioplastic material in the form of flexible film are introduced between these two pieces, and are then joined by sealing with the zip, the fabric remaining with a sandwich-type configuration.

The other two pieces of the cotton fabric of the first pattern are used for the part of the upper lid, such that the two inner layers are introduced into the center of these two previously cut cotton pieces and the four layers are sealed together with the zip. This part of the piece is joined to the one made previously by means of the airtight zip.

To finish the flexible bag, it only needs to be placed inside the coffin, but in order to do so and for the bag to obtain the shape, adhesive tape is placed around the entire coffin and another adhesive tape in the perimeter of the flexible bag, in order to have a rigid appearance when introduced into the coffin.

Therefore, in an embodiment of the final product obtained from the flexible bag, it consists of a four-layer structure, two made of one hundred percent natural cotton and the other two made of biodegradable plastic. These four layers allow us to obtain good permeability due to the type of polymer selected. Good load resistance to support the deceased and a good aesthetic finish, due to the cotton, are also obtained, because it is one hundred percent natural cotton in a cream color, this cotton material replacing the padding currently used for the boxes, thereby obtaining a finish with the same characteristics_{.}

In the upper part of the flexible bag, corresponding to the opening of the box, the 4.5 meter-long zip is located, which allows introducing the decease with great ease. This zip prevents the leakage of gases, and most importantly, provides great permeability, as explained above.

It is worth recalling that the biodegradable flexible bag replaces the zinc box.

Next, to facilitate a better comprehension of the specification and being an integral part thereof, figures are attached representing the object of the invention in an illustrative rather than limitative manner.

### BRIEF 17DESCRIPTION OF THE DRAWINGS

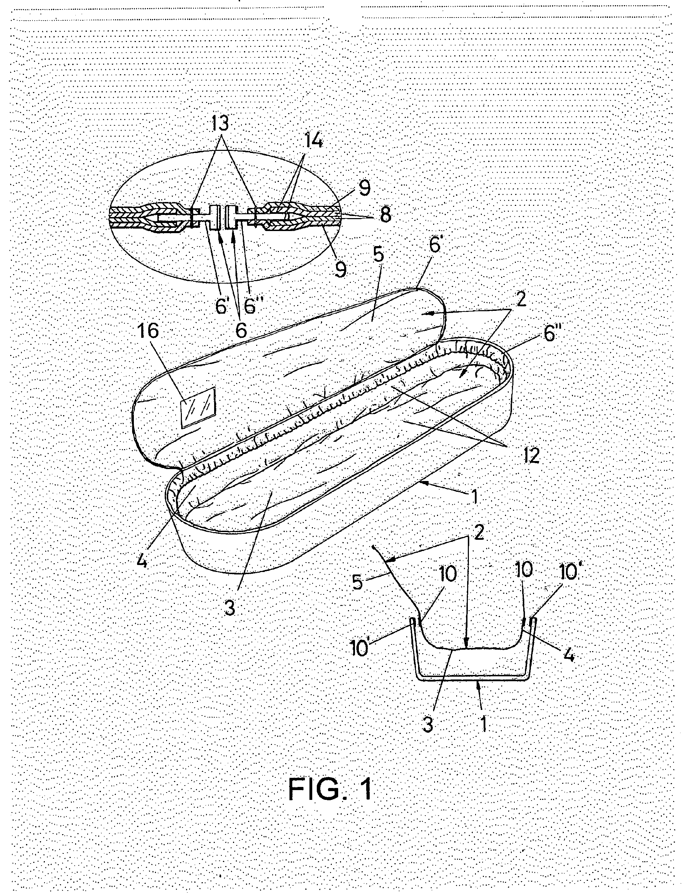

**Figure 1****.-** Shows a perspective view of a biodegradable coffin, object of the invention. It basically comprises a box and a flexible bag housing the deceased. The flexible bag comprises in turn a main body and an independent upper lid closing the opening of the main body by means of a zip associating the lid and the main body of the flexible bag.

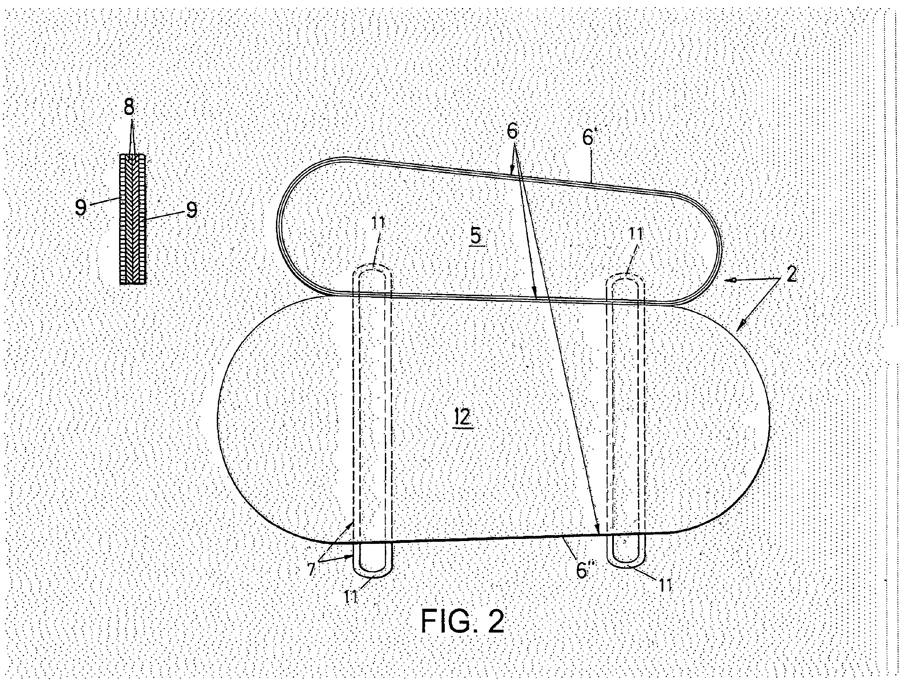

**Figure 2****.-** Shows a plant view of the flexible bag set.

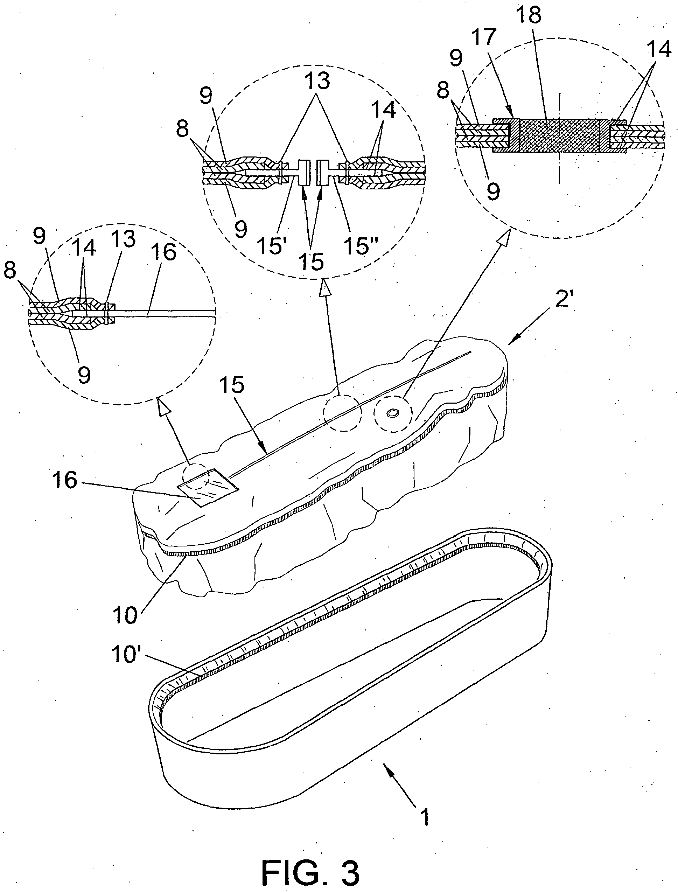

**Figure 3****.-** Shows an exploded perspective view indicating another embodiment of the invention different than the one shown in figure 1.

### DESCRIPTION OF AN EXAMPLE OF AN EMBODIMENT OF THE INVENTION

Taking the numeration adopted in the figures into account, the biodegradable coffin contemplates the following nomenclature used in the description:
1. Box.
2. Flexible bag.
3. Lower base.
4. Lateral wall.
5. Upper lid.
6. Impermeable side zip.
6'. First longitudinal part of the impermeable side zip.
6". Second longitudinal part of the impermeable side zip.
7. Tapes.
8. Inner layers.
9. Outer layers.
10. Front double-sided adhesive tapes.
10'. Rear double-sided adhesive tapes.
11. Handles.
12. Main body.
13. Seam.
14. Adhesive material.
15. Central impermeable zip.
15'. First longitudinal part of the central impermeable zip.
15". Second longitudinal part of the central impermeable zip.
16. Transparent laminar body.
17. Frame.
18. Filter material.

The invention comprises a box 1 and a flexible bag 2, the invention essentially focusing on the structure presented by the aforementioned flexible bag, which in turn comprises a main body 12 with a recess-form structure and an independent upper lid 5, connected to the opening of the main body 12 by means of a side zip 6 in one embodiment.

Therefore, the main body 12 of the flexible bag 2 comprises a lower base 3, a lateral wall 4, which is the continuation of the lower base 3, such that the upper lid 5 is connected to the free edge of the lateral wall 4 by means of the two longitudinal parts 6'-6" constituting the impermeable side zip 6, which is also biodegradable, closing the opening of the main body 12 of the flexible bag 2, opening that is delimited by the free edge of the aforementioned lateral wall 4.

The formation of the lower base 3 and the lateral wall 4 is actually generated when the flexible bag 2 is affixed to the internal surface of the box 1 through means to be described below.

In a particular embodiment, the structure of each one of the two parts of the flexible bag 2 (main body 12 and upper lid 5) comprises two inner layers 8 of impermeable and biodegradable materials, such as a bioplastic, that overlap one another, and two outer layers 9 of a natural material, such as cotton, which is obviously also biodegradable.

The two longitudinal parts 6'-6" of the impermeable side zip 6 are joined to the upper lid 5 and the lateral wall 4 of the flexible bag 2 by means of an adhesive material 14 in an attachment made between the two perimeter edges of the two inner layers 8 of impermeable material, thereby forming a structure in the form of a sandwich.

On the other hand, it should be noted that the perimeter attachment between the outer layers 9 of natural material is made through seams 13 located in the area of attachment of the impermeable side zip 6 to the inner layers 8 of impermeable material, seams 13 that pass through the external layers 9 and the longitudinal parts 6'-6" of the impermeable side zip 6.

On the perforations generated by the seam 13 on the longitudinal parts 6'-6" of the side zip 6, an adhesive is applied to close said perforations in an airtight manner by maintaining the desired permeability.

The main body 12 of the flexible bag 2 is anchored to the internal surface of the box 1 by means of pairs of two-sided adhesive tapes; front 10 adhesive tapes affixed to the main body 12 of the flexible bag 2 and other rear adhesive tapes 10' affixed to the internal surface of the box 1 in proximity to its opening.

It should be noted that the longitudinal parts 6'-6" of the impermeable zip are joined by sealing to the free edges of the two inner layers 8, said longitudinal parts 6'-6" being located between the perimeter sections of said inner layers 8, while the perimeter edges facing each other of the outer layers 9 are joined to the longitudinal parts 6'-6" of the impermeable side zip 6 by means of the aforementioned seams.

The two longitudinal parts 6'-6" of the side zip 6 allow the upper lid 5 to be an independent body with respect to the main body 12 of the flexible bag 2, with which a better and easier opening of the flexible bag 2 is possible,

The flexible bag 2 incorporates two pairs of handles 11 forming part of two closed-loop tapes 7 sewed to one of the outer layers 9 of the main body 12 forming part of said flexible bag 2.

In replacement of the impermeable side zip 6, the closing has been envisaged by means of thermosealing, self-adhesive or sewing. It should also be noted that the closing of the flexible bag 2 may be painted with different products to improve airtightness, using liquid neoprene, for example.

In another embodiment, the upper lid 5 of a flexible bag 2' integrates an impermeable zip 15 centrally arranged in a longitudinal direction.

On the other hand, the upper lid 5 of the flexible bag 2-2' integrates a through-hole in correspondence with which a transparent laminar body 16 made of a biodegradable plastic material facing the face of the deceased inside the coffin is mounted.

A perimeter portion of the transparent laminar body 16 is joined by sealing to the upper lid 5 in the same way as the impermeable zip 6-15.

The central impermeable zip 15 centrally arranged in the upper lid 5 in a longitudinal direction comprises longitudinal parts 15'-15" located between the inner layers 8, while the edges of the outer layers 9 facing each other are joined to said longitudinal parts 15'-15" corresponding to the perimeter of the transparent laminar body 16 by means of a seam 13 in combination with an adhesive that closes the perforations generated by the seam 13 in an airtight manner. In turn, the free edges of the inner layers.8 are also joined in this case by means of an adhesive material .14.

In another embodiment, the upper lid 5 of the flexible bag 2-2' integrates. a housingthrough-hote in correspondence with which a gas cleaning device with an impermeable and airtight closing as well is mounted, comprising a filter material 18 supported by a frame 17 joined in an airtight manner to the upper lid. 5 in correspondence with the perimeter edge of this housing-through hole. The frame 17 of the cleaning device comprises a C-shaped profile adjusted to a perimeter portion of the materials of the upper lid 5 delimiting said housing through hole, with the interposition of an adhesive material 14. The filter material 18 comprises an active carbon material.

## Claims

1. **BIODEGRADABLE COFFIN** having a box (1) and a flexible bag (2-2'), where the flexible bag (2-2') comprises a first main body (12) with a recessform structure and a second body in the manner of an upper lid (5) connected to the opening of the main body (12), both bodies (5-12) comprising a multilayer structure formed by at least an inner layer (8) of impermeable material and at least an outer layer (9) of a natural textile material arranged next to the, at least, inner layer (8), the flexible bag (2-2') being supplemented, furthermore, with a first longitudinal part and a second longitudinal part (6",15") that both belong to an impermeable zips (6-15) for opening and closing the flexible bag (2-2'), means for anchoring the flexible bag (2-2') to the inner surface of the box (1) being included, the upper lid (5) integrates a housing through-hole in correspondence with which a gas cleaning device with an impermeable and airtight closing as well is mounted, comprising a filter material (18) supported by a frame (17) joined in an airtight manner to the upper lid (5) in correspondence with a perimeter edge of this housing-through hole, where the frame (17) of the cleaning device comprises a C-shaped profile adjusted to a perimeter portion delimiting said housing through hole of the upper lid (5), with the interposition of an adhesive material (14).

2. **BIODEGRADABLE COFFIN** according to claim 1, **characterized in that** the, at least, outer layer (9) comprises a resistant one hundred percent cotton material with a warp of 25 threads per centimeter and a weave of 25 picks per centimeter, incorporating a taffeta ligament, each cotton layer having a weight between 155 and 165 g/cm².

3. **BIODEGRADABLE COFFIN** according to any one of the previous claims, **characterized in that** the, at least, inner layer (8) of the flexible bag (2-2') comprises a bioplastic material.

4. **BIODEGRADABLE COFFIN** according to any one of the previous claims, **characterized in that** the anchoring means of the flexible bag (2-2') to the inner surface of the box (1) comprise two-sided adhesive tapes; front (10) adhesive tapes affixed to the main body (12) of the flexible bag (2-2') and other rear adhesive tapes (10') affixed to the internal surface of the box (1) in proximity to its opening, the tapes (10,10') joined to one another by their faces.

5. **BIODEGRADABLE COFFIN** according to any one of the previous. claims, **characterized in that** the two bodies (5-12) comprising the flexible bag (2-2') comprise a multilayer structure formed by two inner layers (8) and two outer layers (9) arranged outside of the free faces of the inner layers (8).

6. **BIODEGRADABLE COFFIN** according to any one of the previous claims, **characterized in that** the main body (12) of the flexible bag (2) comprises a lower base (3) and a lateral wall (4), the upper lid (5) being joined to the free edge of the lateral wall (4) by means of the two longitudinal parts (6',6") of the impermeable side zip (6) connecting the upper lid (5) to the opening of the main body (12) of the flexible bag (2).

7. **BIODEGRADABLE COFFIN** according to any one of the claim 1 to 5, **characterized in that** the upper lid (5) of the flexible bag (2') integrates an impermeable zip (15) centrally arranged in a longitudinal direction.

8. **BIODEGRADABLE COFFIN** according to claim 5, **characterized in that** the longitudinal parts (6'-6") (15'-15") of the impermeable zip (6-15) are joined, by means of sealing, to free edges of the two inner layers (8), said longitudinal parts (6'-6") (15'-15") being located between the perimeter sections of said inner layers (8), while the perimeter edges facing one another of the outer layers (9) are joined to the longitudinal parts (6'-6") (15'-15") of the impermeable zip (6-15) by means of a seam (13) in combination with an adhesive that closes the perforations generated by the seam (13) in the impermeable zip (6-15) in an airtight manner.

9. **BIODEGRADABLE COFFIN** according to claim 8, **characterized in that** the longitudinal parts (6'-6") (15'-15") of the impermeable zip (6-15) are joined to the free edges of the inner layers (8) by means of an adhesive material (14).

10. **BIODEGRADABLE COFFIN** according to any one of the previous claims, **characterized in that** the flexible bag (2-2') incorporates two pairs of handles (11) forming part of two closed-loop tapes (7) sewed to one of the outer layers (9) of the main body (12) forming part of said flexible bag (2-2').

11. **BIODEGRADABLE COFFIN** according to any one of the previous claims, **characterized in that** the upper lid (5) of the flexible bag (2-2') integrates a through-hole in correspondence with which a transparent laminar body (16) made of a biodegradable plastic material facing the face of the deceased inside the coffin is mounted.

12. **BIODEGRADABLE COFFIN** according to claim 11, **characterized in that** a perimeter portion of the transparent laminar body (16) is joined by sealing to the free edges of the two inner layers (8), the perimeter portion being located between the inner layers (8), while the perimeter edges facing each other of the outer layers (9) are joined to the perimeter portion of the transparent laminar body (16) by means of a seam (13) in combination with an adhesive closing the perforations generated by the seam (13) in the transparent laminar body (16), the perimeter portion of the transparent laminar body (16) being joined to the free edges of the inner layers (8) by means of an adhesive material (14).

13. **BIODEGRADABLE COFFIN** according to claim 1 **characterized in that** the filter material (18) comprises an active carbon material.

## Patentansprüche

1. Biologisch abbaubarer Sarg, der einen Kasten (1) und einen flexiblen Sack (2-2') aufweist, wobei der flexible Sack (2-2') einen ersten Hauptkörper (12) mit einem Aufbau in Form einer Vertiefung sowie einen zweiten Körper in Form einer oberen Abdeckung (5) umfasst, der mit der Öffnung des Hauptkörpers (12) verbunden ist, wobei beide Körper (5-12) eine mehrschichtige Struktur umfassen, die durch wenigstens eine innere Schicht (8) aus undurchlässigem Material und wenigstens eine äußere Schicht (9) aus einem Naturtextilmaterial besteht, die direkt an der wenigstens inneren Schicht (8) angeordnet ist, der flexible Sack (2-2') des Weiteren durch einen ersten Längsteil und einen zweiten Längsteil (6", 15") ergänzt wird, die beide zu einem undurchlässigem Reißverschluss (6-15) zum Öffnen und Schließen des flexiblen Sacks (2-2') gehören, wobei ein Mittel zum Verankern des flexiblen Sacks (2-2') an der Innenfläche des Kastens (1) eingeschlossen ist, in die obere Abdeckung ein Gehäuse-Durchgangsloch integriert ist, in dem auch eine Gasreinigungsvorrichtung mit einem undurchlässigen und einem luftdichten Verschluss angebracht ist, die ein Filtermaterial (18) umfasst, das von einem Rahmen (17) gehalten wird, der an einem Umfangsrand dieses Gehäuse-Durchgangslochs luftdicht mit der oberen Abdeckung (5) verbunden ist, wobei der Rahmen (17) der Reinigungsvorrichtung ein C-förmiges Profil umfasst, das an einen Umfangsabschnitt angepasst ist, der das Gehäuse-Durchgangsloch der oberen Abdeckung (5) umgrenzt, und sich dabei ein Klebstoffmaterial (14) dazwischen befindet.

2. Biologisch abbaubarer Sarg nach Anspruch 1, **dadurch gekennzeichnet, dass** die wenigstens äußere Schicht (9) ein beständiges Material aus 100 Prozent Baumwolle mit einer Kette von 25 Fäden pro Zentimeter und einer Webart von 25 Schussfäden pro Zentimeter umfasst, das ein Taffeta-Band (taffeta ligament) enthält, wobei jede Baumwollschicht ein Gewicht zwischen 155 und 156 g/cm² hat.

3. Biologisch abbaubarer Sarg nach einem der vorangehenden Ansprüche, **dadurch gekennzeichnet, dass** die wenigstens innere Schicht (8) des flexiblen Sacks (2-2') ein Biokunststoffmaterial umfasst.

4. Biologisch abbaubarer Sarg nach einem der vorangehenden Ansprüche, **dadurch gekennzeichnet, dass** das Mittel zum Verankern des flexiblen Sacks (2-2') an der Innenfläche des Kastens (1) doppelseitige Klebebänder umfasst, d.h. vordere Klebebänder (10), die an dem Hauptkörper (12) des flexiblen Sacks (2-2') befestigt sind, und andere, hintere Klebebänder (10'), die an der Innenfläche des Kastens (1) nahe an seiner Öffnung befestigt sind, wobei die Bänder (10, 10') über ihre Außenflächen miteinander verbunden sind.

5. Biologisch abbaubarer Sarg nach einem der vorangehenden Ansprüche, **dadurch gekennzeichnet, dass** die zwei Körper (5-12), die den flexiblen Sack (2-2') bilden, eine mehrschichtige Struktur umfassen, die durch zwei innere Schichten (8) und zwei äußere Schichten (9) gebildet wird, die außerhalb der freien Flächen der inneren Schichten (8) angeordnet sind.

6. Biologisch abbaubarer Sarg nach einem der vorangehenden Ansprüche, **dadurch gekennzeichnet, dass** der Hauptkörper (12) des flexiblen Sacks (2) einen unteren Boden (3) und eine seitliche Wand (4) umfasst, wobei die obere Abdeckung (5) mit dem freien Rand der seitlichen Wand (4) über die zwei Längsteile (6', 6") des undurchlässigen seitlichen Reißverschlusses (6) verbunden ist, der die obere Abdeckung (5) mit der Öffnung des Hauptkörpers (12) des flexiblen Sacks (2) verbindet.

7. Biologisch abbaubarer Sarg nach einem der Ansprüche 1 bis 5, **dadurch gekennzeichnet, dass** in die obere Abdeckung (5) des flexiblen Sacks (2') ein undurchlässiger Reißverschluss (15) integriert ist, der in einer Längsrichtung mittig angeordnet ist.

8. Biologisch abbaubarer Sarg nach Anspruch 5, **dadurch gekennzeichnet, dass** die Längsteile (6'-6"), (15'-15") des undurchlässigen Reißverschlusses (6-15) mittels Siegeln mit den freien Rändern der zwei inneren Schichten (8) verbunden werden, wobei sich die Längsteile (6'-6"), (15'-15") zwischen den Umfangsabschnitten der inneren Schichten (8) befinden und dabei die einander zugewandten Umfangsränder der äußeren Schichten (9) mit den Längsteilen (6'-6"), (15'-15") des undurchlässigen Reißverschlusses (6-15) mittels einer Naht (13) in Kombination mit einem Klebstoff verbunden sind, der die durch die Naht (13) in dem undurchlässigen Reißverschluss (6-15) erzeugten Löcher luftdicht verschließt.

9. Biologisch abbaubarer Sarg nach Anspruch 8, **dadurch gekennzeichnet, dass** die Längsteile (6'-6"), (15'-15") des undurchlässigen Reißverschlusses (6-15) mittels eines Klebstoffmaterials (14) mit den freien Rändern der inneren Schichten (8) verbunden sind.

10. Biologisch abbaubarer Sarg nach einem der vorangehenden Ansprüche, **dadurch gekennzeichnet, dass** der flexible Sack (2-2') zwei Paare von Griffen (11) enthält, die Teile zweier Bänder (7) in Form geschlossener Schleifen (7) sind, die an eine der äußeren Schichten (9) des Hauptkörpers (12) angenäht sind, die Teile des flexiblen Sacks (2-2') bilden.

11. Biologisch abbaubarer Sarg nach einem der vorangehenden Ansprüche, **dadurch gekennzeichnet, dass** in die obere Abdeckung (5) des flexiblen Sacks (2-2') ein Durchgangsloch integriert ist, in dem ein transparenter Schichtkörper (16) angebracht ist, der aus biologisch abbaubarem Kunststoffmaterial besteht und dem Gesicht des Verstorbenen im Inneren des Sargs zugewandt ist.

12. Biologisch abbaubarer Sarg nach Anspruch 11, **dadurch gekennzeichnet, dass** ein Umfangsabschnitt des transparenten Schichtkörpers (16) mittels Siegeln mit den freien Rändern der zwei inneren Schichten (8) verbunden wird, wobei sich der Umfangsabschnitt zwischen den inneren Schichten (8) befindet und dabei die einander zugewandten Umfangsränder der äußeren Schichten (9) mit dem Umfangsabschnitt des transparenten Schichtkörpers (16) mittels einer Naht (13) in Kombination mit einem Klebstoff verbunden sind, der die durch die Naht (13) in dem transparenten Schichtkörper (16) erzeugten Löcher verschließt, und der Umfangsabschnitt des transparenten Schichtkörpers (16) mittels eines Klebstoffmaterials (14) mit den freien Rändern der inneren Schichten (8) verbunden ist.

13. Biologisch abbaubarer Sarg nach Anspruch 1, **dadurch gekennzeichnet, dass** das Filtermaterial (18) ein Aktivkohlematerial umfasst.

## Revendications

1. Cercueil biodégradable comportant une boîte (1) et un sac souple (2-2'), où le sac souple (2-2') comprend un premier corps principal (12) ayant une structure de forme évidée et un second corps tel qu'un couvercle supérieur (5) relié à l'ouverture du corps principal (12), les deux corps (5-12) comprenant une structure multicouche formée par au moins une couche interne (8) en matière imperméable et au moins une couche externe (9) en matière textile naturelle disposée près de l'au moins une couche interne (8), le sac souple (2-2') étant complété, en outre, par une première partie longitudinale et une seconde partie longitudinale (6", 15") qui appartiennent toutes deux aux fermetures à glissière imperméables (6-15) pour ouvrir et fermer le sac souple (2-2'), des moyens d'ancrage du sac souple (2-2') étant inclus sur la surface interne de la boîte (1), le couvercle supérieur (5) intégrant un trou traversant de logement en correspondance avec lequel un dispositif d'épuration de gaz ayant une fermeture imperméable et étanche à l'air est également monté, comprenant un matériau filtrant (18) supporté par un cadre (17) assemblé d'une manière étanche à l'air au couvercle supérieur (5) en correspondance avec un bord périmétrique de ce trou traversant le logement, où le cadre (17) du dispositif d'épuration comprend un profil en C ajusté à une partie périmétrique délimitant ledit trou traversant de logement du couvercle supérieur (5), avec l'interposition d'un matériau adhésif (14).

2. Cercueil biodégradable selon la revendication 1, **caractérisé en ce que** l'au moins une couche externe (9) comprend une matière résistante en coton à cent pour cent avec une chaîne de 25 fils par centimètre et une armure de 25 duites par centimètre, incorporant un ligament de taffetas, chaque couche de coton ayant un poids entre 155 et 165 g/cm².

3. Cercueil biodégradable selon l'une quelconque des revendications précédentes, **caractérisé en ce que** l'au moins une couche interne (8) du sac souple (2-2') comprend un matériau bioplastique.

4. Cercueil biodégradable selon l'une quelconque des revendications précédentes, **caractérisé en ce que** les moyens d'ancrage du sac souple (2-2') sur la surface interne de la boîte (1) comprennent deux bandes adhésives double face ; des bandes adhésives avant (10) fixées sur le corps principal (12) du sac souple (2-2') et d'autres bandes adhésives arrière (10') fixées sur la surface interne de la boîte (1) à proximité de son ouverture, les bandes (10, 10') étant assemblées l'une à l'autre par leurs faces.

5. Cercueil biodégradable selon l'une quelconque des revendications précédentes, **caractérisé en ce que** les deux corps (5-12) comprenant le sac souple (2-2') comprennent une structure multicouche formée par deux couches internes (8) et deux couches externes (9) disposées à l'extérieur des trois faces des couches internes (8).

6. Cercueil biodégradable selon l'une quelconque des revendications précédentes, **caractérisé en ce que** le corps principal (12) du sac souple (2) comprend une base inférieure (3) et une paroi latérale (4), le couvercle supérieur (5) étant assemblé au bord libre de la paroi latérale (4) au moyen des deux parties longitudinales (6', 6") de la fermeture à glissière latérale imperméable (6) reliant le couvercle supérieur (5) à l'ouverture du corps principal (12) du sac souple (2).

7. Cercueil biodégradable selon l'une quelconque des revendications 1 à 5, **caractérisé en ce que** le couvercle supérieur (5) du sac souple (2') intègre une fermeture à glissière imperméable (15) disposée de manière centrale dans une direction longitudinale.

8. Cercueil biodégradable selon la revendication 5, **caractérisé en ce que** les parties longitudinales (6'-6") (15'-15") de la fermeture à glissière imperméable (6-15) sont assemblées, par scellage, aux bords libres des deux couches internes (8), lesdites parties longitudinales (6'-6") (15'-15") étant placées entre les sections périmétriques desdites couches internes (8), alors que les bords périmétriques se faisant mutuellement face des couches externes (9) sont assemblés aux parties longitudinales (6'-6") (15'-15") de la fermeture à glissière imperméable (6-15) au moyen d'une couture (13) en combinaison avec un adhésif qui ferme les perforations produites par la couture (13) dans la fermeture à glissière imperméable (6-15) d'une manière étanche à l'air.

9. Cercueil biodégradable selon la revendication 8, **caractérisé en ce que** les parties longitudinales (6'-6") (15'-15") de la fermeture à glissière imperméable (6-15) sont assemblées aux bords libres des couches internes (8) au moyen d'un matériau adhésif (14).

10. Cercueil biodégradable selon l'une quelconque des revendications précédentes, **caractérisé en ce que** le sac souple (2-2') incorpore deux paires de poignées (11) faisant partie de deux bandes en boucle fermée (7) cousues sur l'une des couches externes (9) du corps principal (12) faisant partie dudit sac souple (2-2').

11. Cercueil biodégradable selon l'une quelconque des revendications précédentes, **caractérisé en ce que** le couvercle supérieur (5) du sac souple (2-2') intègre un trou traversant en correspondance avec un corps lamellaire transparent (16) constitué d'un matériau plastique biodégradable orienté vers la face du défunt à l'intérieur du cercueil.

12. Cercueil biodégradable selon la revendication 11, **caractérisé en ce qu'**une partie périmétrique du corps lamellaire transparent (16) est assemblée par scellage aux bords libres des deux couches internes (8), la partie périmétrique étant située entre les couches internes (8), alors que les bords périmétriques se faisant mutuellement face des couches externes (9) sont assemblés à la partie périmétrique du corps lamellaire transparent (16) au moyen d'une couture (13) en combinaison avec un adhésif fermant les perforations produites par la couture (13) dans le corps lamellaire transparent (16), la partie périmétrique du corps lamellaire transparent (16) étant assemblée aux bords libres des couches internes (8) au moyen d'un matériau adhésif (14).

13. Cercueil biodégradable selon la revendication 1, **caractérisé en ce que** le matériau filtrant (18) comprend un matériau de charbon actif.
